# EUROPÄISCHE PATENTSCHRIFT

(11) **EP 1 313 776 B1**
(45) Veröffentlichungstag und Bekanntmachung des Hinweises auf die Patenterteilung: **14.09.2005**
(21) Anmeldenummer: 01980297.4
(22) Anmeldetag: 29.08.2001
(51) Int. Cl.: C08F 8/32

(54) **VERWENDUNG VON POLYESTERAMIDEN ZUR STABILISIERUNG VON ASPHALTENEN IN ROHÖL**
USE OF POLYESTER AMIDES FOR THE STABILISATION OF ASPHALTENES IN CRUDE OIL
UTILISATION DE POLYAMIDES D'ESTER POUR STABILISER DES ASPHALTENES DANS DU PETROLE BRUT

(30) Priorität: 01.09.2000 DE 10043080
(43) Veröffentlichungstag der Anmeldung: 28.05.2003
(73) Patentinhaber: ANTICOR CHIMIE, S.A., 04310 Peyruis (FR)
(72) Erfinder: BREUER, Wolfgang, 41352 Korschenbroich (DE); BIRNBRICH, Paul, 42719 Solingen (DE); GROFFE, Didier, F-04100 Manosque (FR); VON TAPAVICZA, Stephan, 40699 Erkrath (DE); HEROLD, Claus-Peter, 40822 Mettmann (DE); HOF, Matthias, 47249 Duisburg (DE)
(74) Vertreter: Denjean, Eric
(86) Internationale Anmeldenummer: PCT/EP2001/009944
(87) Internationale Veröffentlichungsnummer: WO 2002/018454

(56) Entgegenhaltungen:
- EP-A- 0 693 509
- DE-A- 19 709 797
- US-A- 4 121 026
- US-A- 5 788 722

## Beschreibung

Die vorliegende Erfindung betrifft die Verwendung bestimmte Polyesteramide, zur Stabilisierung von Asphaltenen in Rohöl sowie ein Verfahren zur Verhinderung der Ausfällung von Asphaltenen in Rohölen.

Rohöl stellt eine komplexe Mischung verschiedener paraffinischer und aromatischer Kohlenwasserstoffe dar, wobei die einzelnen Bestandteile sehr unterschiedliche chemische und physikalische Eigenschaften aufweisen. Bei der Destillation von Rohöl erhält man daher sowohl sehr leichtflüchfige, niedrigviskose Bestandteile als auch wachsartige, hochviskose Fraktionen. Zu dieser letzten Gruppe gehören Erdölharze und zum überwiegenden Anteil Asphaltene, die in der Ölphase kolloid-dispers vorliegen.

Die Asphaltene bestehen aus einer Mischung verschiedener, gesättigter, ungesättigter und aromatischer Kohlenwasserstoffe, insbesondere von Naphthalinderivaten. Daneben findet man auch heterocyclische Kohlenwasserstoffe, die zum Teil auch komplexierte Metallionen enthalten. Weiterhin sind Asphaltene reich an Schwefel-, Stickstoff- und Sauerstoffverbindungen. Aufgrund der komplexen Zusammensetzung werden Asphaltene im allgemeinen über ihre Löslichkeit charakterisiert. So bezeichnet man die in Heptan oder Pentan unlösliche aber in Toluol lösliche Erdölfraktion als Asphaltene, wobei das "Lösen" der Asphaltene einen komplexen Vorgang darstellt, für den bislang noch keine vollständige theoretische Beschreibung existiert (vgl. E.Y.Sheu, O.C. Mullins, *Asphaltenes - Fundamentals and Applications,* Plenum Press, New York, 1995, Chapter I und Chapter III).

Asphaltene liegen in der Ölphase des Rohöls als Micellkolloide vor, wobei die einzelnen Micellen jeweils aus mehreren unterschiedlichen Molekülen bestehen. Die Micellen weisen je nach Temperatur und Zusammensetzung der Ölphase unterschiedliche Größen auf. So ist z.B. bekannt, daß leichtere aromatische Kohlenwasserstoffe im Rohöl die Asphalten-Micellen stabilisieren. Bei den Bedingungen der Erdölproduktion bzw. -förderung kommt es aber häufig zu einer Ausfällung der Asphaltene, was zur Bildung von hochviskosen, wachsartig bis festen Rückständen auf der Oberfläche der Produktionsanlagen und der das Bohrloch umgebenden erdölhaltigen Formation führt. Die Asphaltenrückstände verstopfen die Poren der Formation, was zu einer spürbaren Verringerung der Förderraten führt und im schlimmsten Fall eine Förderung vollständig unmöglich machen kann. Auch Asphaltenrückstände auf den Oberflächen der Produktionsanlagen, beispielsweise dem Förderrohr oder den Wänden des Casings von Pipelines oder Separatoren können die Förderung erheblich behindern.

Es sind daher verschiedene Methoden bekannt, Asphaltene im Rohöl dispergiert zu halten bzw. deren Ausfällung zu verhindem. Die DE 197 09 797 beschreibt dazu synergistisch wirkende Mischungen von Alkylphenolformaldehydharzen und bestimmten oxalkylierten Aminen als Asphalten-Dispergatoren. Aus der US 4,414,035 ist bekannt, daß Alkylarylsulfonsäurederivate, beispielsweise Dodecylbenzolsulfonsäure, geeignet ist. Asphaltenen in Rohölen zu dispergieren.

Aus der US 5,788,722 ist bekannt, Polyisobutylen mit C₄ bis C₁₀ einfach ungesättigtte Saüren und dann mit Aminen zur Reaktion zu bringen.

In der Praxis zeigt sich aber häufig, daß die bekannten Hilfsmittel zur Asphalten-Stabilisierung je nach Art und Herkunft des Rohöls sehr unterschiedliche Wirksamkeiten aufweisen. Dies ist insbesondere auf die komplexe und sehr variable Struktur der Asphaltenen zurückzuführen. Daher werden weiterhin neue Mittel zur Asphaltenstabilisierung gesucht. Außerdem sind die im Stand der Technik bekannten Hilfsmittel häufig entweder toxisch und/oder ökologisch bedenklich. Sowohl aus Gründen der Umweltverträglichkeit von Arbeitsmitteln als auch aus Gründen des Arbeitsschutzes wird daher versucht, die Verwendung derartiger Substanzen zu vermeiden.

Die Aufgabe der vorliegenden Erfindung war es daher auch bei sehr unterschiedlichen Rohölqualitäten wirksame Alternativen zu den im Stand der Technik bekannten Stabilisatoren für Asphaltene in Rohölen bereitzustellen. Es wurde gefunden, daß bestimmte Polyesteramide die obige Aufgabe erfüllen.

Gegenstand der vorliegenden Anmeldung ist somit die Verwendung Bestimmter Polyesteramide, die durch eine zweistufige Reaktion erhaltlich sind, wobei (A) Polyisobutylen mit mindesten einfach ungesättigten Säuren mit 3 bis 21 C-Atomen oder deren Derivaten, vorzugsweise deren Carbonsäureanhydriden, entweder (A1.) in Gegenwart von Radikalstartern bei Temperaturen von 65 bis 100 °C oder (A.2) ohne Radikalstarter, aber ggf. in Anwesenheit von Lewis-Säuren bei 150 bis 250 °C, mindestens 3 Stunden umgesetzt wird und zu dem so erhaltenen Produkt im zweiten Schritt (B) ein Alkylamin der allgemeinen Formel R-NH₂, in der R für einen Alkylrest mit 1 bis 4 C-Atomen steht, zugegeben wird und der Ansatz bei 60 bis 100 °C gerührt, anschließend abgekühlt und das Endprodukt auf an sich bekannte Weise isoliert wird.

Die verwendeten Polyesteramide basieren auf Polyisobutylen, einem dem Fachmann bekannten Rohstoff, der durch Polymersiation von Isobutylen großtechnisch gewonnen wird. Zu den Einzelheiten der Herstellung sowie den Eigenschaften dieser Verbindungsklasse sei verwiesen auf Ullmanns Encyclopedia of Industrial Chemistry, Sixth Edition, 2000 electronic Release - Butenes - Chemical Properties. Die Polyisobutylenen weisen Molgewichte im Bereich von 500 bis 50.000, vorzugsweise von 1000 bis 25.000 und insbesondere von 1500 bis 15.000 auf. Neben reinem Polyisobutylen kann es auch bevorzugt sein, Co-Polymeren einzusetzen, die zu mindestens 50 % Isobutylen-Monomere enthalten sowie weitere Monomere.

Die Polyisobutylenen werden bei Temperaturen von mindestens 60 °C, vorzugsweise von 65 bis 95 und insbesondere von 75 bis 85 °C in einem Reaktionsgefäß vorgelegt und dann mit den ungesättigten Säuren versetzt.

Diese Säuren bzw. deren Derivate sind mindesten einfach olefinisch ungesättigt und enthalten vorzugsweise 3 bis 7 C-Atome. Besonders bevorzugt sind die Anhydride. Ein geeignetes Anhydrid ist vorzugsweise Maleinsäureanhydrid. Aber auch die Malein- oder Fumarsäure bzw. deren Ester oder Acrylsäure, Methacrylsäure und deren Derivate sind geeignete Komponenten im Schritt (A).

Die Reaktion des ersten Schrittes verläuft in einer Variante in Gegenwart von Radikalstartern, vorzugsweise dem Azobisisobutyronitril (AIBN) und/oder weiteren Radikalstartern, z.B. Dibenzoylperoxiden, die dem Fachmann bekannt sind, wobei hier insbesondere solche Radikalstarter mit Halbwertszeiten im Bereich von 60 bis 70 °C von 10 h bevorzugt sind. Namentlich genannt werden sollen hier das Dibenzoyl-peroxid, tert.-Amylperoxy-2-ethylhexanoat, tert.-Butylperoxy-2-ethylhexanoat, tert.-Butylperoxy-isobutyrat und tert.-Butyl-monoperoxy-maleat.

Alternativ ist es aber auch möglich ohne Radikalstarter zu arbeiten. Die Reaktion gemäß (A.2) stellt systematisch eine En-Reaktion dar, wobei es möglich ist, diese in Gegenwart von Katalysatoren ausgewählt aus der Gruppe der Lewis-Säuren durchzuführen. Geeignete Lewis-Säuren sind z.B. Bortrifluorid, die Bromide von Phosphor und Aluminium, die Chloride von Bor, Aluminium, Phosphor, Bissmut, Arsen, Eisen, Zink und Zinn. Bevorzugt ist es aber, ohne Lewis-Säuren zu arbeiten und die Reaktanden Polyisobutylen und Carbonsäure direkt miteinander zur Reaktion zu bringen. Die Reaktionstemperatur im Falle der Variante (A.2) liegt höher als bei (A.1), nämlich im Bereich von 150 bis 250 °C.

Vorzugsweise findet der Schritt (A) des erfindungsgemäßen Verfahrens unter einen InertAtmosphäre statt, also z.B. Argon oder vorzugsweise Stickstoff. Das Gewichtsverhältnis von Polyisobutylen zu Carbonsäurenanhydrid liegt vorzugsweise im Bereich von 200 : 1 bis 1 : 200. Bevorzugt sind Gewichtsverhältnisse von 100 : 1 bis 1 : 100. Besonders bevorzugt sind Gewichtsverhältnisse von 5 : 1 bis 20 : 1 und insbesondere der Bereich von 10 : 1 bis 15 : 1. Die Auswahl geeigneter Gewichtsverhältnisse orientiert sich am Molekulargewicht der eingesetzten Komponenten und kann durch den Fachmann ohne Weiteres vorgenommen werden.

Die Reaktionsdauer beträgt mindestens 3 Stunden bei mindestens 60 °C im Falle (A.1) bzw. mindestens 150 °C im Falle (A.2), wobei höhere Temperaturen und längere Reaktionszeiten, z.B. 4 bis 8 h bzw. 5 bis 7 h bevorzugt sind. Im Anschluß daran kann der Reaktionsmischung direkt eine geeignetes Amin der Formel R-NH₂ zugegeben werden. Es ist aber auch möglich, zunächst das Reaktionsgemisch von nicht-umgesetztem Anhydrid zu befreien, vorzugsweise durch Destillation bei emiedrigtem Druck, und anschließend das so aufgearbeitete Reaktionsgemisch mit dem Amin zur Reaktion zu bringen, wobei die Reaktionstemperatur mindestens 50 ° C betragen sollte.
Durch die exotherme Umsetzung des Polyisobutylen-Anhydrid-Produkts mit dem Amin steigt die Temperatur im Reaktionsgefäß auf etwa 100 °C an. Danach kühlt sich das Gemisch mit dem Endprodukt wieder ab und kann danach ohne weitere Reinigung eingesetzt werden. Die Verfahrensschritte (A) und (B) können in einem Reaktionsansatz oder in zwei getrennten Ansätzen durchgeführt werden. Es ist sowohl eine kontinuierliche als auch ein batch-weise Verfahrensdurchführung möglich.

Die Amine der Formel R-NH₂ sind bekannte Verbindungen, und vorzugsweise ausgewählt ist das Monoethanolamin. Das Gewichtsverhältnis zwischen Polyisobutylen und Amin beträgt vorzugsweise 100 : 1 bis 10 : 1. Besonders bevorzugt ist der Bereich von 75: 1 bis 10 : 1 und insbesondere der Bereich von 50 : 1 bis 15 : 1.

Beschrieben wird auch ein Verfahren zur Herstellung von Polyesteramiden, worin im Schritt (A) Polyisobutylen mit Carbonsäureanhydriden entweder in Gegenwart von Radikalstartern bei Temperaturen von 65 bis 100 °C oder ohne Radikalstarter, aber ggf. in Gegenwart von Lewis-Säuren bei 150 bis 250 °C mindestens 3 Stunden umgesetzt wird und zu dem so erhaltenen Produkt im Schritt (B) ein Alkylamin der allgemeinen Formel R-NH₂, in der R für einen Alkylrest mit 1 bis 4 C-Atomen steht, zugegeben wird und der Ansatz bei 60 bis 100 °C gerührt wird, anschließend abgekühlt und das Produkt auf an sich bekannte Weise isoliert wird.

Die Polyesteramide gemäß der obigen Beschreibung zeigen eine überraschende Wirkung als Asphaltendispergatoren. Unter Asphaltenen werden im Rahmen dieser Anmeldung solche Bestandteile von Rohöl verstanden, die gemäß DIN 51595 (Dez. 1983) beim Lösen des Erdöls mit dem 30fachen Volumen Heptan bei 18-28 °C ausfallen und in Benzol löslich sind. Die Asphaltene können sich in fester Form bei der Erdölgewinnung auf den Oberflächen von Produktionsanlagen bilden, wobei unter Produktionsanlagen alle technischen Anlagen verstanden werden, die direkt mit dem Öl in Kontakt geraten. Dazu zählen beispielsweise das Förderrohr, die Auskleidung des Bohrlochs, das sogenannte Casing, und alle sonstigen ölführenden Leitungen, Pipelines, Tankwagen oder in Separatoren, Pumpen und Ventile. In der Regel bestehen die Oberflächen dieser Produktionsanlagen aus Metall, insbesondere aus Stahl. Unter Produktionsanlagen werden aber auch die der eigentlichen Förderung nachgeschalteten Verarbeitungsschritte des Rohöls verstanden, beispielsweise bei der destillativen Aufarbeitung der Rohölfraktionen. Auch beim Transport von Rohöl durch Pipelines oder dessen Lagerung können Asphaltenrückstände auftreten und damit die Produktion behindern. Feste Asphaltenrückstände entstehen aber auch auf der Oberfläche der das Bohrloch umgebenden, erdölhaltigen Formation und verstopfen dort die Poren des Gesteins, was zu einer spürbaren Verringerung der Förderleistung führt.

Unter Rohölen wird das unmittelbar aus der Erde kommende, nicht raffinierte Erdöl verstanden. Es handelt sich hierbei um komplexe Mischungen von überwiegend Kohlenwasserstoffen mit Dichten im Bereich von 0,65 bis 1,02 g/cm³ und Brennwerten von 38 bis 46 MJ/kg. Die Siedepunkte der wichtigsten Rohölbestandteile liegen im Temperaturbereich von 50 bis 350 °C (vergl. Römpp Chemielexikon, Band 2, 1997, Seiten 1210 bis 1213).

Durch efindungsgemäße Verwendung der Polyesteramide, d.h. deren Zusatz zu den Rohölen, wird das Ausfallen von Asphaltenen bzw. die Bildung von Rückständen wirkungsvoll verhindert. Um das Ausfallen von Asphaltenen zu verhindern, ist es vorteilhaft diese dem Rohöl in Mengen von 50 bis 2500 ppm, vorzugsweise von 100 bis 1000 ppm und insbesondere in Mengen von 150 bis 500 ppm (Aktivsubstanz) zuzusetzen. Weiterhin sind solche Polyesteramide bevorzugt einzusetzen, deren Flammpunkte höchstens 80 °C betragen. Die erfindungsgemäßen Polyesteramide können auch mit Erfolg zur Asphalteneinhibierung in Rohölfolgeprodukten, wie dem sogenannten Fuel, middle destillates oder resiual fuels, verwendet werden.

Ein weiterer Gegenstand der vorliegenden Erfindung betrifft ein Verfahren zur Verhinderung des Ausfallens von Asphaltenen aus Rohölen und Rohölfolgeprodukten, wobei man den Rohölen Polyesteramide gemäß der obigen Beschreibung als Stabilisatoren in Mengen von 100 bis 2500 ppm zusetzt.

Die vorliegende technische Lehre schließt auch die Verwendung der Polyesteramide in Form von verdünnten Lösungen in aromatischen Lösungsmitteln, vorzugsweise Toluol ein. Diese verdünnten Lösungen enthalten die Polyesteramide vorzugsweise in Mengen von 2 bis 50 Gew.-%, insbesondere in Mengen von 2 bis 20 und besonders bevorzugt 2 bis 15 Gew.-%. Derartige Formulierungen können noch weitere Additive, wie Korrosionsinhibitoren oder Entschäumer enthalten.

### Beispiele

### Herstellung der Polyesteramide:

### Beispiel 1

550 g Polyisobutylen (Glissopal 1000 BASF) wurden bei 80 °C vorgelegt und anschließend mit 54 g Maleinsäureanhydrid versetzt. Unter kräftigem Rühren wurde zu der zweiphasigen Mischung 6 g AIBN gegeben. Nach 5 h Reaktionszeit bei 80 °C wurden zur Reaktionsmischung 34 g Monoethanolamin zugegeben. Nach einsetzten der exothermen Reaktion stieg die Temperatur auf 100 °C an. Nachdem die Temperatur auf 80 °C gefallen war konnte das erfindungsgemäße Produkt isoliert werden.

### Beispiel 2

550 g Polyisobutylen (Glissopal 1300 BASF) wurden bei 80 °C vorgelegt und anschließend mit 42 g Maleinsäureanhydrid versetzt. Unter kräftigem Rühren wurde zu der zweiphasigen Mischung 6 g AIBN gegeben. Nach 5 h Reaktionszeit bei 80 °C wurden zur Reaktionsmischung 26 g Monoethanolamin zugegeben. Nach einsetzten der exothermen Reaktion stieg die Temperatur auf 100 °C an. Nachdem die Temperatur auf 80 °C gefallen war konnte das erfindungsgemäße Produkt isoliert werden.

### Beispiel 3

550 g Polyisobutylen (Glissopal 1000 BASF) wurden bei 70 °C vorgelegt und anschließend mit 54 g Maleinsäureanhydrid versetzt. Unter kräftigem Rühren wurde zu der zweiphasigen Mischung 6 g AIBN gegeben. Nach 5 h Reaktionszeit bei 80 °C wurde das nicht umgesetzte Maleinsäureanhydrid (30 g) destillativ entfernt.

### Beispiel 4

100 g des in 3 erhaltenen Produkts wurden bei 60 °C mit 0,54 g Monoethanolamin versetzt. Nach 1 h Reaktionszeit bei 60 °C wurde das Reaktionsprodukt abgefüllt.

### Beispiel 5

550 g Polyisobutylen (Glissopal 1300 BASF) wurden bei 70 °C vorgelegt und anschließend mit 42 g Maleinsäureanhydrid versetzt. Unter kräftigem Rühren wurde zu der zweiphasigen Mischung bei 65 °C 6 g AIBN gegeben. Nach 5 h Reaktionszeit bei 80 °C wurde das nicht umgesetzte Maleinsäureanhydrid (17 g) destillativ entfernt.

### Beispiel 6

100 g des in 5 erhaltenen Produkts wurden bei 60 °C mit 0,54 g Monoethanolamin versetzt. Nach 1 h Reaktionszeit bei 60 °C wurde das Reaktionsprodukt abgefüllt.

### Beispiel 7

550 g Polyisobutylen (Napvis 10) wurden unter Stickstoffstrom bei 200°C vorgelegt. Dann werden innerhalb von 3 Stunden in mehreren Portionen insgesamt 56 g Maleinsäureanhydrid zugesetzt. Die Temperatur wird auf 210°C gesteigert, und man läßt für 5 Stunden bei dieser Temperatur nachreagieren. Der Ansatz wird auf 150°C abgekühlt und über eine Glasfiltemutsche geschickt, um das erfindungsgemäße Produkt gemäß (A2.) zu erhalten.

### Beispiel 8

550 g Polyisobutylen (Napvis 5) wurden unter Stickstoffstrom bei 200°C vorgelegt. Dann werden innerhalb von 3 Stunden in mehreren Portionen insgesamt 69 g Maleinsäureanhydrid zugesetzt. Die Temperatur wird auf 210°C gesteigert, und man läßt für 5 Stunden bei dieser Temperatur nachreagieren. Der Ansatz wird auf 150°C abgekühlt und über eine Glasfiltemutsche geschickt, um das erfindungsgemäße Produkt gemäß (A.2) zu erhalten.

### Beispiel 9

550 g Polyisobutylen (Napvis 30) wurden unter Stickstoffstrom bei 200°C vorgelegt. Dann werden innerhalb von 3 Stunden in mehreren Portionen insgesamt 41 g Maleinsäureanhydrid zugesetzt. Die Temperatur wird auf 210°C gesteigert, und man läßt für 5 Stunden bei dieser Temperatur nachreagieren. Der Ansatz wird auf 150°C abgekühlt und über eine Glasfiltemutsche geschickt, um das erfindungsgemäße Produkt gemäß (A.2) zu erhalten.

### Test der dispergierenden Eigenschaften:

Der Test basiert auf der Tatsache, daß Asphaltene in aromatischen, aber nicht in aliphatischen Kohlenwasserstoffen löslich sind. Somit können Dispergatoren getestet werden, indem man das Öl oder extrahierte Asphaltene in einem aromatischen Lösemittel löst und dann ein nicht-aromatische Lösungsmittel zusetzt, um einen Niederschlag zu erzeugen.
Da Asphaltene von dunkler Farbe sind, kann das Ausmaß des Niederschlages durch eine UVspektroskopische Messung der überstehenden Flüssigkeit bestimmt werden.

### Vorschrift Dispergiertest

a) Eine 25-%ige Öl-Lösung in Toluol wird filtriert, um Verunreinigungen zu beseitigen;
b) 9,5 ml Heptan als Fällungsmittel für Asphaltene und 0,5 ml Toluol/Dispergator-Mischung (25 : 1) in ein gut 10 ml fassendes graduiertes Glasröhrchen vorlegen und gut schütteln. Dies entspricht einer Dispergatorkonzentration von 2000 ppm. Bei Bedarf kann die Menge Dispergator variiert werden. Für die Nullproben wird reines Toluol verwendet;
c) in das Glasröhrchen wird dann 0,1 ml von der gefilterten Öl-Lösung dazugegeben und ebenfalls gut geschüttelt;
d) das Ganze 2 Stunden ohne Erschütterungen stehen lassen. Die ausgefällten Asphaltene sollen sich am Boden des Röhrchens sammeln können;
e) nach Ablauf dieser Zeit wird das Volumen des Sediments an Hand der Graduierung abgeschätzt, das Aussehen der gesamten Probe protokolliert und dann wird von der überständigen Phase 1 ml vorsichtig mit einer Pipette aufgenommen;
f) die abgesaugte Menge wird in 5 ml einer 99 : 1 Toluol-Triethanolamin-Mischung gelöst und bei 700 nm im UV-Spektrometer die maximale Absorption gemessen.

### Ergebnisse:

Gemäß der obigen Beschreibung wurden Tests an Rohölen unterschiedlicher Qualität durchgeführt. In der folgenden Tabellen 1 bis 3 sind die Ergebnisse mit einem Standarddispergator des Standes der Technik (DSA 900, Fa. Anticor) den Ergebnissen mit den erfindungsgemäßen Verbindungen 1 bis 6 gegenübergestellt. Um die Ergebnisse vergleichbar zu machen wurden die Absorptionswerte der Proben durch den Absorptionswert der Blindprobe (reines Lösungsmittels) dividiert (Angabe in den Tabellen als relative Absorption). Je näher die Werte an 1,0 liegen, desto besser war die Wirkung des Dispergators.

**Tabelle 1:**

| | Venezuela 1 | Venezuela 2 | Venezuela 3 |
|---|---|---|---|
| Dispergator | rel. Absorption | rel. Absorption | rel. Absorption |
| D S A 900 | 0,72 | 0,78 | 0,77 |
| 1 | 0,77 | 0,81 | 0,81 |
| 2 | 0,82 | 0,86 | 0,83 |
| 3 | - | - | - |
| 4 | - | - | - |
| 5 | 0,81 | 0,85 | 0,81 |
| 6 | 0,83 | - | - |

**Tabelle 2**

| | Mexico | Österreich | Norwegen |
|---|---|---|---|
| Dispergator | rel. Absorption | rel. Absorption | rel. Absorption |
| D S A 900 | 0,63 | 0,47 | 0,76 |
| 1 | 0,76 | 0,47 | 0,66 |
| 2 | 0,76 | 0,54 | 0,76 |
| 3 | - | 0,55 | 0,76 |
| 4 | - | 0,54 | 0,79 |
| 5 | 0,75 | 0,51 | 0,64 |
| 6 | - | 0,47 | 0,64- |

**Tabelle 3**

| | Algerien |
|---|---|
| Dispergator | rel. Absorption |
| D S A 900 | 0,63 |
| 1 | 0,63 |
| 2 | - |
| 3 | - |
| 4 | - |
| 5 | 0,68 |
| 6 | 0,71 |

Man erkennt, daß die erfindungsgemäßen Dispergatoren durchweg besser Ergebnisse erzielen als das Produkt aus dem Stand der Technik.

## Patentansprüche

1. Verwendung von Polyesteramiden, erhältlich durch eine zweistufige Reaktion, wobei
(A) ein Polyisobutylen mit mindestens einfach ungesättigten Säuren mit 3 bis 21 C-Atomen oder deren Derivaten entweder
(A.1) in Gegenwart von Radikalstartern bei Temperaturen von 65 bis 100° C oder
(A.2) ohne Radikalstarter, ggf. katalysiert durch Lewis-Saüren, bei 150 bis 250° C umgesetzt wird und zu dem so erhaltenen Produkt
(B) ein Alkylamin der allgemeinen Formel R-NH₂, in der R für einen Alkylrest mit 1 bis 4 C-Atomen steht, zugegeben wird und der Ansatz bei 60 bis 100° C gerührt wird, anschließend abgekühlt und das Produkt auf an sich bekannte Weise isoliert Wird,
als Stabilisatoren für Asphaltene in Rohölen und Rohölfolgeprodukten.

2. Verwendung nach Anspruch 1, **dadurch gekennzeichnet, daß** Polyesteramide mit einem Flammpunkt von höchstens 80° C verwendet werden.

3. Verwendung nach den Ansprüchen 1 und 2, **dadurch gekennzeichnet, daß** die Polyesteramide den Rohölen in Mengen von 50 bis 2500 ppm, vorzugsweise von 100 bis 1000 ppm und insbesondere von 150 bis 500 ppm zugesetzt werden.

4. Verfahren zur Verhinderung des Ausfallens von Asphalten aus Rohölen, **dadurch gekennzeichnet, daß** man Rohölen oder deren Folgeprodukten Polyesteramide, erhältlich durch eine zweistufige Reaktion, wobei
(A) ein Polyisobutylen mit mindestens einfach ungesättigten Säuren mit 3 bis 21 C-Atomen oder deren Derivaten entweder
(A.1) in Gegenwart von Radikalstartern bei Temperaturen von 65 bis 100° C oder
(A.2) ohne Radikalstarter, ggf. katalysiert durch Lewis-Saüren, bei 150 bis 250° C umgesetzt wird und zu dem so erhaltenen Produkt
(B) ein Alkylamin der allgemeinen Formel R-NH₂, in der R für einen Alkylrest mit 1 bis 4 C-Atomen steht, zugegeben wird und der Ansatz bei 60 bis 100° C gerührt wird, anschließend abgekühlt und das Produkt auf an sich bekannte Weise isoliert Wird
als Stabilisatoren in Mengen von 100 bis 2500 ppm zusetzt.

## Claims

1. The use of polyester amides obtainable by a two-stage reaction in which:
(A) a polyisobutylene is reacted with at least monounsaturated acids containing 3 to 21 carbon atoms or derivatives thereof, either
(A.1) in the presence of radical initiators at temperatures of 65 to 100° C or
(A.2) without radical initiators, optionally catalyzed by Lewis acids, at 150 to 250° C, and
(B) an alkylamine with the general formula R―NH₂, in which R is an alkyl group containing 1 to 4 carbon atoms, is added to the product thus obtained and the mixture is stirred at 60 to 100° C and then cooled and the product is isolated in known manner,
as stabilizers for asphaltenes in crude oils and crude oil derivatives.

2. The use claimed in claim 1, **characterized in that** polyester amides with a flash point of at most 80° C are used.

3. The use claimed in claims 1 to 2, **characterized in that** the polyester amides are added to the crude oils in quantities of 50 to 2500 ppm, preferably in quantities of 100 to 1000 ppm and more particularly in quantities of 150 to 500 ppm.

4. A process for preventing the precipitation of asphaltenes from crude oils, **characterized in that** polyester amides obtainable by a two-stage reaction in which:
(A) a polyisobutylene is reacted with at least monounsaturated acids containing 3 to 21 carbon atoms or derivatives thereof, either
(A.1) in the presence of radical initiators at temperatures of 65 to 100° C or
(A.2) without radical initiators, optionally catalyzed by Lewis acids, at 150 to 250° C, and
(B) an alkylamine with the general formula R―NH₂, in which R is an alkyl group containing 1 to 4 carbon atoms, is added to the product thus obtained and the mixture is stirred at 60 to 100° C and then cooled and the product is isolated in known manner,
are added to the crude oils or their derivates as stabilizers in quantities of 100 to 2500 ppm.

## Revendications

1. Utilisation de polyesters amides susceptibles d'être obtenus par une réaction en deux étapes selon laquelle :
(A) on fait réagir du polyisobutylène avec au moins des acides monoinsaturés contenant de 3 à 21 atomes de carbone ou des dérivés, soit
(A.1) en présence d'initiateurs radicalaires à une température comprise entre 65 et 100°C, ou
(A.2) sans initiateurs radicalaires, éventuellement en présence de catalyseurs choisis parmi les acides de Lewis, à une température de 150 à 250°C, et
(B) on ajoute au produit ainsi obtenu, une alkylamine de formule générale R―NH₂, dans laquelle R est un groupe alkyl comprenant de 1 à 4 atomes de carbone, le mélange étant agité à une température de 60 à 100°C, puis refroidi, puis on isole ensuite le produit de manière connue,
pour stabiliser les asphaltènes présents dans le pétrole brut et ses dérivés.

2. Utilisation selon la revendication 1, **caractérisée en ce qu'**on utilise des polyesters amides ayant un point d'éclair d'au moins 80°C.

3. Utilisation selon l'une des revendications 1 ou 2, **caractérisée en ce que** l'on ajoute les polyesters amides au pétrole brut, dans une quantité de 50 à 2 500 ppm, avantageusement dans une quantité de 100 à 1 000 ppm et plus particulièrement dans une quantité de 150 à 500 ppm.

4. Procédé pour empêcher la précipitation des asphaltènes présents dans le pétrole brut, **caractérisé en ce que** l'on ajoute au pétrole brut ou ses dérivés, en tant que stabilisants, dans une quantité de 100 à 2 500 ppm, des polyesters amides susceptibles d'être obtenus par une réaction en deux stages :
(A) on fait réagir du polyisobutylène avec au moins des acides monoinsaturés contenant de 3 à 21 atomes de carbone ou des dérivés, soit
(A.1) en présence d'initiateurs radicalaires à une température comprise entre 65 et 100°C, ou
(A.2) sans initiateurs radicalaires, éventuellement en présence de catalyseurs choisis parmi les acides de Lewis, à une température de 150 à 250°C, et
(B) on ajoute au produit ainsi obtenu, une alkylamine de formule générale R―NH₂, dans laquelle R est un groupe alkyl comprenant de 1 à 4 atomes de carbone, le mélange étant agité à une température de 60 à 100°C, puis refroidi, puis on isole ensuite le produit de manière connue.
